Europäisches Patentamt

European Patent Office

Office européen des brevets

(19)

(11) Veröffentlichungsnummer: **0 371 151 B1**

(12) **EUROPÄISCHE PATENTSCHRIFT**

(45) Veröffentlichungstag der Patentschrift: **27.12.91**

(51) Int. Cl.⁵: **B60K 26/04**, B60K 31/04

(21) Anmeldenummer: **88119381.7**

(22) Anmeldetag: **22.11.88**

(54) Sicherheitsschaltung für elektronische Geschwindigkeitsregel- bzw. Steueranlagen für Kraftfahrzeuge.

(30) Priorität: **29.10.88 DE 3836913**

(43) Veröffentlichungstag der Anmeldung:
**06.06.90 Patentblatt 90/23**

(45) Bekanntmachung des Hinweises auf die
Patenterteilung:
**27.12.91 Patentblatt 91/52**

(84) Benannte Vertragsstaaten:
**DE FR SE**

(56) Entgegenhaltungen:
**WO-A-87/06200
FR-A- 2 343 623
GB-A- 2 009 968
US-A- 4 526 060
US-A- 4 569 425**

(73) Patentinhaber: **VDO Adolf Schindling AG
Gräfstrasse 103
W-6000 Frankfurt/Main 90(DE)**

(72) Erfinder: **Aufmkolk, Rudolf
Frankfurter Strasse 148
W-6233 Kelkheim(DE)**

(74) Vertreter: **Klein, Thomas, Dipl.-Ing. (FH)
Sodener Strasse 9 Postfach 6140
W-6231 Schwalbach a. Ts.(DE)**

## Beschreibung

Die Erfindung betrifft eine Sicherheitsschaltung für elektronische Geschwindigkeitsregel- bzw. Steueranlagen für Kraftfahrzeuge mit Leerlaufregelung, wobei einer Stelleinrichtung für die Leistung des Motors des Kraftfahrzeugs ein Sollwert zuführbar ist und wobei die Stelleinrichtung einen Stellregler, eine Endstufe und eine Drosselklappe als Stellglied umfaßt.

Geschwindigkeitsregelanlagen für Kraftfahrzeuge umfassen unter anderem ein elektro-motorisches Stellglied, eine Schnelltrennkupplung und einen unterlagerten Lageregelkreis, welcher das elektro-motorische Stellglied entsprechend der Vorgabe eines Reglers in die vorgegebene Lage bringt. Aus Sicherheitsgründen ist eine Abschalteinrichtung vorgesehen, welche ein Öffnen der Drosselklappe bei einem Auszustand der Geschwindigkeitsregelanlage verhindert. Da das Öffnen der Drosselklappe dann nicht nur temporär verhindert werden soll, weist die Abschalteinrichtung speichernde Eigenschaften auf, weshalb auch von einem Abschaltspeicher gesprochen wird.

Ähnliche Sicherheitseinrichtungen sind bei sogenannten E-Gasanlagen vorgesehen, bei welchen die Stellung der Drosselklappe nach der Vorgabe durch das Fahrpedal geregelt wird.

Es sind ferner für Kraftfahrzeuge Einrichtungen zur Regelung der Leerlaufdrehzahl bekannt, bei welchen eine zur Drosselklappe parallele Luftführung geregelt wird. Dieses bedeutet jedoch einen zusätzlichen Aufwand, der vermieden werden kann, wenn die Drosselklappe auch zur Regelung des Leerlaufs benutzt wird. Das ist jedoch im Zusammenhang mit den bekannten E-Gasanlagen und Geschwindigkeitsregelanlagen nicht möglich, da im Abschaltfall ein Öffnen der Drosselklappe unmöglich gemacht wird.

Schließlich ist aus dem Dokument GB-A-1 516 623 eine Einrichtung zu Regelung der Fahrgeschwindigkeit eines Kraftfahrzeugs mit einem elektromotorischen Stellglied bekannt, das über eine auf ein Abschaltsignal hin ausrückbare Kupplung auf die Drosselklappe einwirkt. Zur Erhöhung der Sicherheit wird durch das Abschaltsignal der Sollwert des Regelkreises auf eine Standard-Leerlaufstellung gesetzt. Eine Regelung des Leerlaufs abhängig von der jeweiligen Belastung des Kraftfahrzeugmotors ist damit nicht möglich.

Aufgabe der Erfindung ist es, eine Sicherheitsschaltung für elektronische Geschwindigkeitsregel- bzw. Steueranlagen für Kraftfahrzeuge mit Leerlaufregelung vorzuschlagen, wobei trotz abgeschalteter Regel- bzw. Steueranlage eine Betätigung der Drosselklappe für eine Leerlaufregelung möglich ist.

Die Erfindung ist dadurch gekennzeichnet, daß eine Schalteinrichtung vorgesehen ist, welche die Steuerung der Endstufe in Richtung auf ein Öffnen der Drosselklappe in Abhängigkeit von einem Ausgangssignal eines Komparators verhindert und daß dem Komparator ein der Stellung der Drosselklappe entsprechendes Istwertsignal und ein Grenzwert zuführbar sind, wobei der Grenzwert mindestens beim Abschalten der Regelung bzw. Steuerung eine zur Leerlaufregelung erforderliche Größe annimmt.

Die erfindungsgemäße Sicherheitsschaltung hat den Vorteil, daß unabhängig vom Ausgangssignal des Reglers die Stellung der Drosselklappe auf einen Bereich begrenzt wird, der einerseits eine Leerlaufregelung zuläßt und andererseits nicht zu sicherheitskritischen Fahrzuständen führt. Außerdem läßt sich die erfindungsgemäße Sicherheitsschaltung mit wenigen Bauelementen verwirklichen.

Ferner weist die erfindungsgemäße Sicherheitsschaltung den Vorteil auf, daß eine Rückführung der Drosselklappe in den Leerlaufbereich selbst dann schnell erfolgt, wenn der Regler - beispielsweise zur Erhöhung des Fahrkomforts - mit Trägheit behaftet ist.

Bei einer Weiterbildung der Erfindung ist vorgesehen, daß der Stellregler und die Endstufe mit einer ersten Leitung für Signale zur Steuerung der Endstufe in Richtung auf ein Schließen der Drosselklappe und mit einer zweiten Leitung für Signale zur Steuerung der Endstufe in Richtung auf ein Öffnen der Drosselklappe verbunden sind und daß die Schalteinrichtung im Verlauf der zweiten Leitung angeordnet ist.

Eine andere Weiterbildung der Erfindung besteht darin, daß als Endstufe eine Brückenschaltung mit mindestens vier Halbleiterschaltern vorgesehen ist und daß einer von denjenigen Halbleiterschaltern, die zum Öffnen der Drosselklappe in den leitenden Zustand gesteuert werden, über die Schalteinrichtung mit einem Pol einer Betriebsspannungsquelle verbunden ist.

Durch die in den Unteransprüchen aufgeführten Maßnahmen sind vorteilhafte Weiterbildungen und Verbesserungen der im Hauptanspruch angegebenen Erfindung möglich.

Die Erfindung läßt zahlreiche Ausführungsformen zu. Eine davon ist schematisch in der Zeichnung anhand mehrerer Figuren dargestellt und nachfolgend beschrieben. Es zeigt:

Fig. 1 ein Blockschaltbild eines ersten Ausführungsbeispiels, das sowohl als Geschwindigkeitsregelanlage als auch als E-Gasanlage dient,

Fig. 2 ein Teil der Schaltungsanordnung nach Fig. 1 in detaillierter Darstellung,

Fig. 3 ein Blockschaltbild eines zweiten Ausführungsbeispiels und

Fig. 4     ein Teil der Schaltungsanordnung nach Fig. 3 in detaillierterer Darstellung.

Gleiche Teile sind in den Figuren mit gleichen Bezugszeichen versehen.

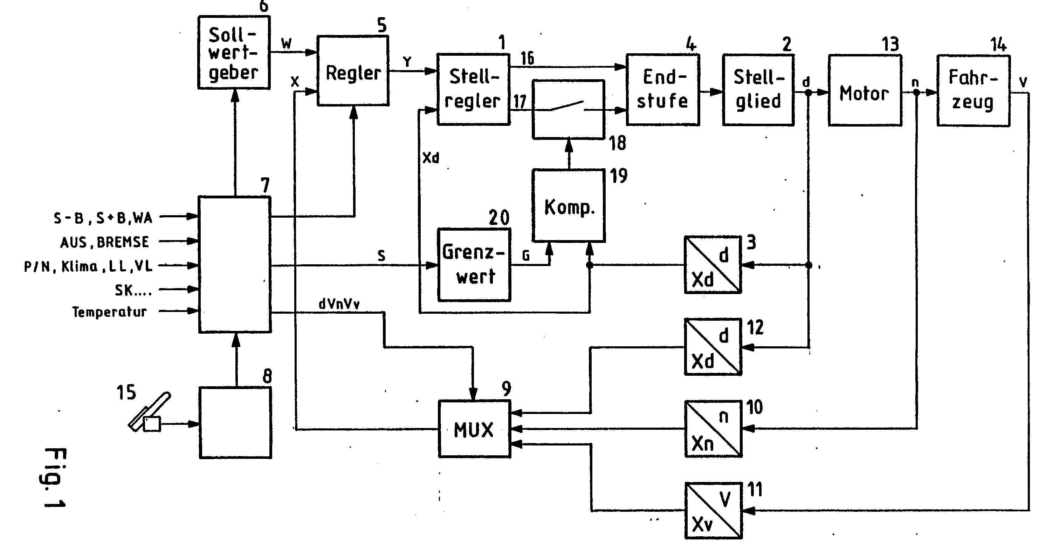

Die in Fig. 1 dargestellte Schaltungsanordnung kann sowohl zur Geschwindigkeitsregelung als auch als E-Gasanlage verwendet werden. Ein Lageregelkreis für die nicht dargestellte Drosselklappe besteht aus einem Stellregler 1 einer Endstufe 4 einem Stellglied 2 und einem Stellungsgeber 3, der die Stellung der Drosselklappe in einen Istwert umwandelt. Dem Lageregelkreis wird als Sollwert Wd die Stellgröße Y des Reglers 5 zugeleitet. Aus der Differenz zwischen dem Sollwert Wd und dem Istwert Xd wird im Stellregler 1 eine Stellgröße Yd abgeleitet, entsprechend der das Stellglied 2 die Drosselklappe antreibt und damit die Leistung des Motors 13 beeinflußt. Die Drehzahl n des Motors 13 teilt sich dem Fahrzeug 14 mit, das sich mit einer Geschwindigkeit v bewegt. Zur Umwandlung der Drehzahl n, der Geschwindigkeit v und der Stellung der Drosselklappe in elektrische Istwert-Signale ist jeweils ein Geber 10, 11, 12 vorgesehen, deren Ausgänge mit Eingängen eines Multiplexers 9 verbunden sind.

Mit Hilfe des Multiplexers 9 kann jeweils eines der Istwert-Signale - im folgenden Istwert X genannt - dem Regler 5 zugeführt werden. Der Multiplexer 9 wird von einer Steuerschaltung 7 durch Zuführung eines Signals gesteuert, welches besagt, daß entweder die Drosselklappenstellung d oder die Drehzahl n oder die Geschwindigkeit v als Istwert X verwendet werden soll.

Einen Sollwert W erhält der Regler 5 von einem Sollwert-Geber 6, der wiederum von der Steuerschaltung in Abhängigkeit von dem jeweiligen Betriebszustand gesteuert wird. So wird beispielsweise bei der Verwendung der in Fig. 1 dargestellten Schaltungsanordnung als E-Gasanlage die Stellung eines Fahrpedals 15 mit Hilfe eines Gebers 8 in ein elektrisches Signal umgewandelt, das von der Steuerschaltung 7 an den Sollwert-Geber 6 weitergereicht wird. Im Falle einer Geschwindigkeitsregelanlage wird in der Steuerschaltung 7 diejenige Geschwindigkeit, welche im Augenblick eines Tastendrucks gefahren wird, als Sollwert gespeichert und an den Sollwert-Geber 6 weitergeleitet.

Dem Steuergerät 7 werden verschiedene Kommandosignale S + B, S-B, WA, Aus, Bremse zugeführt, die im Zusammenhang mit Geschwindigkeitsregelanlagen bekannt sind. So bewirkt beispielsweise ein Betätigen der Bremse, daß der Steuerschaltung 7 das Signal Bremse zugeführt wird, worauf die Steuerschaltung die Geschwindigkeitsregelung abschaltet. Ferner werden zur Verbesserung der Regelung der Steuerschaltung 7 verschiedene Informationen zugeführt, wie beispielsweise in welcher Stellung sich ein automatisches Getriebe befindet, ob die Klimaanlage eingeschaltet ist, ob die Drosselklappe im Leerlaufanschlag oder im Vollastanschlag steht, ob ein Sicherheitskontakt angesprochen hat und wie hoch die Temperatur ist. Diese Informationen wirken sich auf dem Regler 5 zugeführte Parameter aus. Da derartige Steuerschaltungen an sich bekannt sind und deren Einzelheiten zum Verständnis der Erfindung nicht erforderlich sind, wird von einer genaueren Beschreibung der Steuerschaltung 7 abgesehen.

Ein Abschalten der Regelung kann beispielsweise, wie oben erwähnt, durch verschiedene Bedienvorgänge des Fahrers ausgelöst werden, es kann jedoch auch von Überwachungsschaltungen bei auftretenden Fehlern ausgelöst werden. In jedem Fall soll beim Abschalten der Regelung die Drosselklappe in den Leerlaufbereich zurückgeführt werden - unabhängig davon, welche Stellgröße der Regler 5 abgibt.

Hierzu dient bei dem Ausführungsbeispiel nach Fig. 1 ein Schalter 18, der in die Leitung 17 zwischen dem Stellregler 1 und der Innenstufe 4 eingeschaltet ist. Bei normalem Betrieb ist der Schalter geschlossen (leitend), so daß ein Stellen der Drosselklappe in beiden Richtungen möglich ist. Impulse, welche über die Leitung 16 zur Endstufe geführt werden, bewirken ein Schließen der Drosselklappe, während Impulse auf der Leitung 17 ein Öffnen der Drosselklappe bewirken. Je nach Verhältnis der Impulsbreiten stellt sich ein Gleichgewicht bei einer Stellung der Drosselklappe ein. Durch einen entsprechenden logischen Pegel des Schaltsignals S ist der Komparator 19 wirkungslos.

Nimmt jedoch das Schaltsignal S einen das Abschalten der Regelung darstellenden Pegel ein, wird dem Komparator 19 von der Schaltung 20 ein Grenzwert G zugeführt, welcher der maximal zulässigen Drosselklappenöffnung bei der Leerlaufregelung entspricht. Dieser Grenzwert wird im Komparator 19 mit dem Istwertsignal Xd verglichen. Ist Xd kleiner als G, bleibt der Schalter 18 geschlossen, so daß trotz abgeschalteter Regelung bzw. Steuerung eine Leerlaufregelung möglich bleibt. Erst wenn die Drosselklappenöffnung größer als die für den Leerlauf maximal zulässige Öffnung werden sollte, wird Xd größer als G, so daß der Schalter 18 geöffnet wird. Die Impulse, die über die Leitung 16 der Endstufe zugeführt werden, bewirken dann eine Verringerung der Öffnung der Drosselklappe, bis Xd wieder unter den Grenzwert G sinkt und somit der Schalter 18 wieder geschlossen wird.

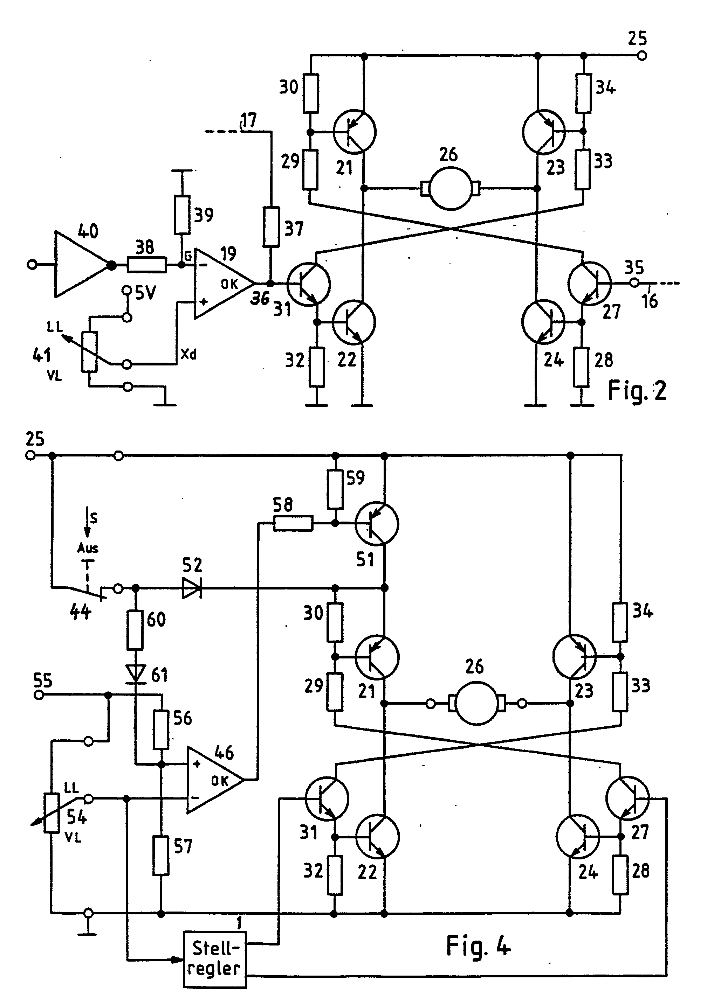

Fig. 2 zeigt die Endstufe 4, den Stellungsgeber 3, den Schalter 18, den Komparator 19 und die Schaltung 20 zur Grenzwertvorgabe in detaillierterer Darstellung. Die Endstufe ist als Brückenendstufe ausgebildet und besteht im wesentlichen aus zwei Brückenzweigen mit jeweils zwei Transistoren 21, 22, 23, 24, wobei die mit dem Pluspol 25 der Betriebsspannungsquelle verbundenen Transistoren PNP-Transistoren sind und die mit Masse verbundenen Transistoren 23, 24 den Leitfähigkeitstyp NPN aufweisen. Ein Motor 26 des Stellgliedes 2 (Fig. 1) befindet sich in der Brückendiagonale. Je nach Dreh- bzw. Antriebsrichtung sind entweder die Transistoren 21 und 24 oder die Transistoren 22 und 23 leitend. Die Transistoren 21 und 24 werden mit Hilfe eines Treibertransistors 27 in den leitenden Zustand gesteuert, wobei dem Treibertransistor 27 ein Emitter-Widerstand 28 und Kollektor-Widerstände 29, 30 zugeordnet sind. In ähnlicher Weise erfolgt die Steuerung der Transistoren 22 und 23 mit Hilfe des Treibertransistors 31, der mit den Widerständen 32, 33 und 34 beschaltet ist.

Die Basisanschlüsse der Treibertransistoren 27 und 31 bilden die Steuereingänge 35, 36 der Endstufe. Wird dem Steueranschluß 35 eine positive Spannung zugeführt, so erfolgt eine Verringerung der Drosselklappenöffnung, wogegen bei einer positiven Spannung an dem Steuereingang 36 ein Öffnen erfolgt. Während der Steuereingang 35 über die Leitung 16 (Fig. 1) direkt mit dem Stellregler verbunden ist, erfolgt der Anschluß des Steuereingangs 36 an die Leitung 17 über einen Widerstand 37. Der Steuereingang 36 ist ferner mit einem Ausgang des Komparators 19 verbunden. Der Ausgang wird von einem offenem Kollektor gebildet, der bei einem der möglichen Signalpegel hochohmig ist und somit die Signale am Steuereingang 36 nicht beeinflußt, während bei dem anderen Signalpegel eine Verbindung des Steuereingangs 36 mit Massepotential erfolgt.

Zwei als Spannungsteiler geschaltete Widerstände 38, 39 bilden die Schaltung 20 (Fig. 1) zur Grenzwertvorgabe. Dieser wird das Schaltsignal S über einen Invertierer 40 zugeführt. Der Stellungsgeber 3 (Fig. 1) wird in der Schaltungsanordnung nach Fig. 2 von einem Potentiometer 41 gebildet, dessen Schleifer mit der Drosselklappenwelle verbunden ist und dessen Bahn mit einer konstanten Spannung von 5 V beaufschlagt ist. Der Schleifer des Potentiometers 41 führt das Istwertsignal Xd und ist mit dem nichtinvertierenden Eingang des Komparators 19 verbunden.

Bei normalem Betrieb weist das Signal S einen Pegel von 5 V (High) auf, so daß am Ausgang des Invertierers 40 und damit am invertierenden Eingang des Komparators 19 Massepotential liegt. Da Xd nicht negativ werden kann, bleibt der Ausgang des Komparators 19 hochohmig, so daß Signale, die ein Öffnen der Drosselklappe bewirken, ungehindert über den Widerstand 37 zum Steuereingang 36 der Endstufe gelangen.

Wird jedoch aus einem der bereits erwähnten Gründe die Regelung bzw. Steuerung abgeschaltet, so nimmt das Schaltsignal S einen Wert von etwa 0 V (Low) ein. Die Ausgangsspannung des Invertierers 40 steigt auf 5 V, so daß am invertierenden Eingang des Komparators 19 ein durch das Teilerverhältnis des Spannungsteilers 38, 39 gegebener Grenzwert von beispielsweise 4, 5 V ansteht. Nur wenn die Drosselklappe sich in einem Bereich geringer Öffnung befindet, ist der Spannungswert des Signals Xd größer als G, so daß ein Öffnen der Drosselklappe über die Leitung 17 und den Steuereingang 36 möglich ist. Wird jedoch die Drosselklappe weiter geöffnet, so wird der Spannungswert Xd kleiner als die dem invertierten Eingang zugeführte Spannung und der Komparatorausgang verbindet den Steuereingang 36 mit Massepotential, so daß eine Steuerung der Drosselklappe über die Leitung 17 nicht möglich ist.

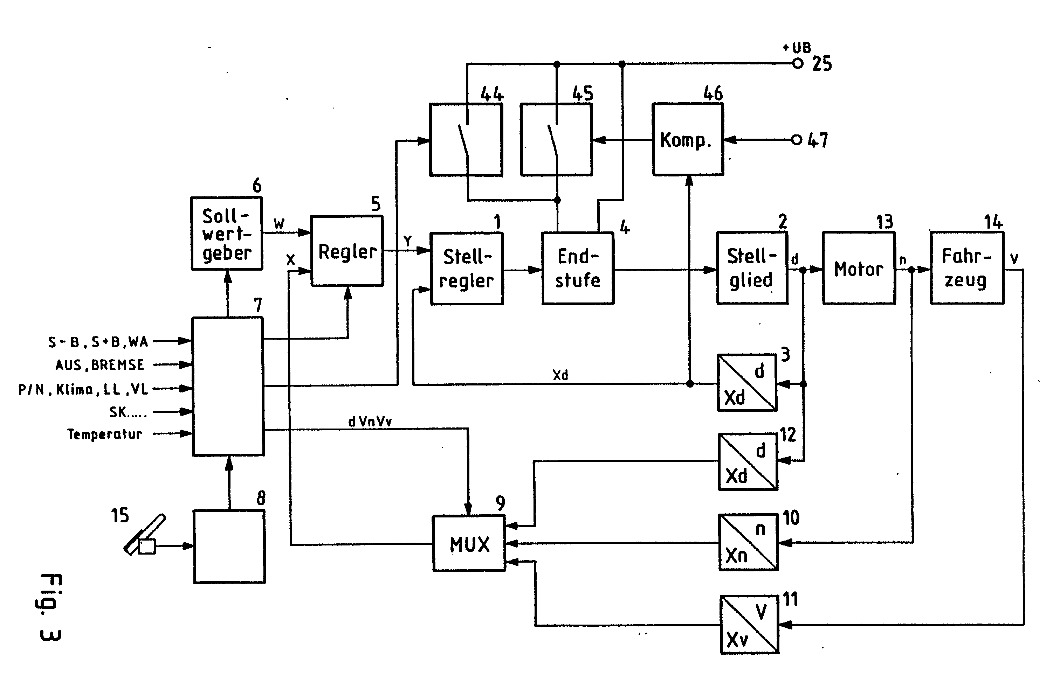

Die Schaltungsanordnung nach Fig. 3 umfaßt ein zweites Ausführungsbeispiel, wobei die an sich bekannten Teile und Funktionen der Schaltung nach Fig. 1 gleichen. Die Endstufe 4 ist ebenfalls als Brückenendstufe ausgebildet, ihre beiden Zweige sind jedoch getrennt mit dem positiven Pol 25 der Betriebsspannungsquelle verbunden. Die Zuführung der Betriebsspannung zu demjenigen der Transistoren, dessen Leitendwerden ein Öffnen der Drosselklappe zur Folge hat, erfolgt über eine Schalteinrichtung aus zwei parallelgeschalteten Schaltern 44, 45. Der Schalter 45 wird von der Steuerschaltung 7 in den nichtleitenden Zustand gesteuert, wenn die Regelung bzw. Steuerung abgeschaltet werden soll, worauf die Drosselklappenöffnung verringert wird. Um jedoch ein vollständiges Schließen der Drosselklappe zu verhindern, und eine Leerlaufregelung zu ermöglichen, wird bei Drosselklappenstellungen im Leerlaufbereich der Schalter 45 über einen Komparator 46 in den leitenden Zustand gesteuert. Dem Komparator 46 wird einerseits das Istwertsignal Xd und andererseits über einen Eingang 47 ein Grenzwert G zugeführt.

Fig. 4 zeigt Einzelheiten der Endstufe 4, des Stellungsgebers 3 und der Schalteinrichtung 44, 45 in Verbindung mit dem Komparator 46 und dem Stellregler 1. Die Endstufe ist wie die Endstufe gemäß Fig. 2 aufgebaut, eine Erörterung erübrigt sich daher. Der Kollektor des Transistors 21 und der Widerstand 30 sind bei der Schaltungsanordnung nach Fig. 4 jedoch nicht direkt, sondern einerseits über einen weiteren Transistor 51 und andererseits über eine Diode 52 und den Schalter 44 mit dem positiven Pol 25 der Betriebsspannungsquelle verbunden. Im Normalbetrieb erhält der Transistor 21 positive Spannung über den Schalter 44 und die Diode 52. Der Schalter 44 wird in den nichtleitenden Zustand gesteuert, wenn die Regelung bzw. Steuerung abgeschaltet wird.

Der Stellungsgeber 3 wird von dem Potentiometer 54 gebildet, wobei der Schleifer bei der Leerlaufstellung der Drosselklappe mit einer bei 55 zugeführten positiven Spannung von beispielsweise 3 V beaufschlagt ist und bei Vollast auf Massepotential liegt. Der Schleifer des Potentiometers 54 ist mit dem invertierenden Eingang des Komparators 46 verbunden, während der nichtinvertierende Eingang über einen Spannungsteiler 56, 57 einen Grenzwert erhält. Befindet sich bei nichtleitendem Schalter 44 die Drosselklappe im Leerlaufbereich, so ist die am invertierenden Eingang liegende Spannung positiver als die am nichtinvertierenden Eingang liegende Spannung. Der Ausgang des Komparators 46 verbindet dann einen dem Transistor 51 vorgeschalteten Spannungsteiler 58, 59 mit Massepotential, so daß der Transistor 51 leitend wird und die Drosselklappe weiter geöffnet werden kann.

Befindet sich jedoch die Drosselklappe in einer weiter geöffneten Stellung, so wird die vom Potentiometer 54 an den invertierenden Eingang des Komparators 46 abgegebene Spannung kleiner als die Spannung am nichtinvertierenden Eingang, so daß der Ausgang des Komparators 46 hochohmig wird und damit der Transistor 51 in den nichtleitenden Zustand geschaltet wird. Ein weiteres Öffnen der Drosselklappe durch den Stellregler 1 ist dann nicht mehr möglich.

Bei geschlossenem Schalter 44 wird der Grenzwert auf einen höheren Wert angehoben, der außer durch die Widerstände 56, 57 durch den Widerstand 60 gegeben ist. Die Dioden 52 und 61 verhindern bei geöffnetem Schalter 44 eine Beeinflussung des Grenzwertes durch den jeweiligen Schaltzustand des Transistors 51 und damit ein Schwingen der vom Komparator 46 und vom Transistor 51 gebildeten Schaltung.

## Patentansprüche

1. Sicherheitsschaltung für elektronische Geschwindigkeitsregel- bzw. Steueranlagen für Kraftfahrzeuge mit Leerlaufregelung, wobei einer Stelleinrichtung für die Leistung des Motors des Kraftfahrzeugs ein Sollwert zuführbar ist und wobei die Stelleinrichtung einen Stellregler, eine Endstufe und eine Drosselklappe als Stellglied umfaßt, dadurch gekennzeichnet, daß eine Schalteinrichtung (18; 44, 45) vorgesehen ist, welche die Steuerung der Endstufe (4) in Richtung auf ein Öffnen der Drosselklappe in Abhängigkeit von einem Ausgangssignal eines Komparators (19, 46) verhindert, und daß dem Komparator ein der Stellung der Drosselklappe entsprechendes Istwertsignal und ein Grenzwert zuführbar sind, wobei der Grenzwert mindestens beim Abschalten der Regelung bzw.

Steuerung eine zur Leerlaufregelung erforderliche Größe annimmt.

2. Sicherheitsschaltung nach Anspruch 1, dadurch gekennzeichnet, daß der Stellregler (1) und die Endstufe (4) mit einer ersten Leitung (16) für Signale zur Steuerung der Endstufe in Richtung auf ein Schließen der Drosselklappe und mit einer zweiten Leitung (17) für Signale zur Steuerung der Endstufe in Richtung auf ein Öffnen der Drosselklappe verbunden sind und daß die Schalteinrichtung (18) im Verlauf der zweiten Leitung (17) angeordnet ist.

3. Sicherheitsschaltung nach Anspruch 2, dadurch gekennzeichnet, daß eine Brückenendstufe mit je einem Steuereingang (35, 36) je Drehrichtung der Drosselklappe vorgesehen ist, daß in die Zuleitung zum Steuereingang (36), dessen Ansteuerung ein Öffnen der Drosselklappe zur Folge hat, ein Widerstand (37) eingeschaltet ist, daß der Ausgang des Komparators (19) mit dem Steuereingang (36) verbunden ist, daß ein Schaltsignal einen ersten Eingang des Komparators (19) und das Istwertsignal einem zweiten Eingang des Komparators zuführbar ist.

4. Sicherheitsschaltung nach Anspruch 3, dadurch gekennzeichnet, daß das Schaltsignal über einen Spannungsteiler (38, 39) zuführbar ist.

5. Sicherheitsschaltung nach Anspruch 3, dadurch gekennzeichnet, daß der Komparator (19) von einem Operationsverstärker mit einem Ausgang mit offenem Kollektor gebildet ist.

6. Sicherheitsschaltung nach Anspruch 1, dadurch gekennzeichnet, daß als Endstufe (4) eine Brückenschaltung mit mindestens vier Halbleiterschaltern (21 bis 24) vorgesehen ist und daß einer (21) von denjenigen Halbleiterschaltern (21, 24), die zum Öffnen der Drosselklappe in den leitenden Zustand gesteuert werden, über die Schalteinrichtung (44, 45) mit einem Pol (25) einer Betriebsspannungsquelle verbunden ist.

7. Sicherheitsschaltung nach Anspruch 6, dadurch gekennzeichnet, daß die Schalteinrichtung aus zwei im wesentlichen parallelgeschalteten Schaltern (44, 45) besteht, von denen ein erster vom Schaltsignal und der zweite vom Ausgangssignal des Komparators (46) steuerbar ist.

8. Sicherheitsschaltung nach Anspruch 7, dadurch gekennzeichnet, daß der zweite Schalter ein Transistor (51) ist, dessen Basis über einen Spannungsteiler mit dem nichtinvertierenden Eingang des Komparators 46 verbunden ist, daß der vom Pol (25) der Betriebsspannungsquelle abgewandte Anschluß des ersten Schalters (44) über eine Diode (52) mit dem Kollektor des Transistors (51) und über einen Widerstand (60) und eine weitere, bei geöffnetem ersten Schalter (44) entgegengesetzt gepolte Diode (61) mit dem nichtinvertierenden Eingang des Komparators (46) verbunden ist.

9. Sicherheitsschaltung nach einem der vorhergehenden Ansprüche, dadurch gekennzeichnet, daß im Falle einer E-Gasanlage dem Regler (5) die Stellung des Fahrpedals (15) als Sollwert und die Stellung des Stellgliedes (2) als Istwert zuführbar sind.

10. Sicherheitsschaltung nach einem der Ansprüche 1 bis 8, dadurch gekennzeichnet, daß im Falle einer Geschwindigkeitsregelanlage dem Regler (5) ein gespeicherter Sollwert und als Istwert die Fahrzeuggeschwindigkeit zuführbar sind.

11. Sicherheitsschaltung nach einem der Ansprüche 1 bis 8, dadurch gekennzeichnet, daß dem Regler (5) als Istwert ferner die Drehzahl zuführbar ist.

## Claims

1. Protective circuit for electronic cruise control systems or control systems for motor vehicles having idle speed control, it being possible to feed a desired value to a control device for the engine output of the motor vehicle, and the control device comprising an adjustor, an output stage and a throttle valve as actuator, characterised in that a switching device (18; 44, 45) is provided which, as a function of an output signal of a comparator (19, 46), prevents the output stage (4) from being controlled in the direction of opening the throttle valve, and in that it is possible to feed the comparator an actual-value signal corresponding to the position of the throttle valve and a limit value, the limit value assuming, at least when control is switched off, a magnitude required for idle speed control.

2. Protective circuit according to Claim 1, characterised in that the adjustor (1) and the output stage (4) are connected to a first line (16) for signals for controlling the output stage in the direction of closing the throttle valve and to a second line (17) for signals for controlling the output stage in the direction of opening the throttle valve, and in that the switching device (18) is arranged in the course of the second line (17).

3. Protective circuit according to Claim 2, characterised in that a bridge output stage is provided with one control input (35, 36) each per direction of rotation of the throttle valve, in that a resistor (37) is switched into the supply lead to the control input (36), whose triggering leads to opening of the throttle valve, in that the output of the comparator (19) is connected to the control input (36), and in that a switching signal can be fed to a first input of the comparator (19) and the actual-value signal can be fed to a second input of the comparator.

4. Protective circuit according to Claim 3, characterised in that the switching signal can be fed via a voltage divider (38, 39).

5. Protective circuit according to Claim 3, characterised in that the comparator (19) is formed by an operational amplifier having an output with an open collector.

6. Protective circuit according to Claim 1, characterised in that a bridge circuit having at least four semiconductor switches (21 to 24) is provided as output stage (4), and in that one (21) of those semiconductor switches (21, 24) which are controlled to open the throttle valve in the conducting state is connected via the switching device (44, 45) to a pole (25) of an operating voltage source.

7. Protective circuit according to Claim 6, characterised in that the switching device consists of two switches (44, 45) connected essentially in parallel, of which a first can be controlled by the switching signal and the second by the output signal of the comparator (46).

8. Protective circuit according to Claim 7, characterised in that the second switch is a transistor (51) whose base is connected via a voltage divider to the non-inverting input of the comparator (46), in that the terminal of the first switch (44) averted from the pole (25) of the operating voltage source is connected via a diode (52) to the collector of the transistor (51) and via a resistor (60) and a further diode (61), which is oppositely poled when the first switch (44) is open, to the non-inverting input of the comparator (46).

9. Protective circuit according to one of the preceding claims, characterised in that in the case of an electronic acceleration system it is possible to feed the controller (5) the position of the accelerator pedal (15) as the desired value, and the position of the actuator (2) as the actual value.

10. Protective circuit according to one of Claims 1 to 8, characterised in that in the case of a cruise control system it is possible to feed the controller (5) a stored desired value and, as the actual value, the vehicle speed.

11. Protective circuit according to one of Claims 1 to 8, characterised in that it is further possible to feed the controller (5) the speed as the actual value.

**Revendications**

1. Circuit de sécurité pour installations électroniques de régulation ou de commande de la vitesse pour véhicules à moteur à régulation de marche à vide, circuit dans lequel on peut amener une valeur prescrite à un dispositif réglant pour la puissance du moteur de véhicule et dans lequel le dispositif réglant comporte un régulateur de position, un étage final et un papillon des gaz comme organe réglant, circuit caractérisé par le fait qu'il est prévu un dispositif (18 ; 44, 45) de commutation qui interdit la manoeuvre de l'étage final (4), dans le sens de l'ouverture du papillon des gaz, en fonction d'un signal de sortie d'un comparateur (19, 46) ; et par le fait qu'au comparateur on peut amener un signal de valeur réelle correspondant à la position du papillon des gaz et une valeur limite, la valeur limite prenant, au moins lors de la mise hors circuit de la régulation ou de la commande, une valeur nécessaire pour la régulation de marche à vide.

2. Circuit de sécurité selon la revendication 1, caractérisé par le fait que le régulateur (1) de position et l'étage final (4) sont reliés avec un premier conducteur (16) pour des signaux pour la manoeuvre de l'étage final dans le sens de la fermeture du papillon des gaz et avec un second conducteur (17) pour des signaux pour la manoeuvre de l'étage final dans le sens de l'ouverture du papillon des gaz, et que le dispositif (18) de commutation est disposé sur le second conducteur (17).

3. Circuit de sécurité selon la revendication 2, caractérisé par le fait qu'il est prévu un étage final en pont avec, respectivement, une entrée (35, 36) de commande pour chaque sens de rotation du papillon des gaz ; par le fait que, sur le conducteur arrivant à l'entrée (36) de commande, dont l'activation a pour conséquence l'ouverture du papillon des gaz, est mise en circuit une résistance (37) ; par le fait que la sortie du comparateur (19) est reliée à l'entrée (36) de commande ; par le fait que l'on peut amener un signal de commutation à une première entrée du comparateur (19) et que l'on peut amener le signal de valeur réelle à une seconde entrée du comparateur.

4. Circuit de sécurité selon la revendication 3, caractérisé par le fait que le signal de commutation peut être amené par l'intermédiaire d'un diviseur (38, 39) de tension.

5. Circuit de sécurité selon la revendication 3, caractérisé par le fait que le comparateur (19) est formé d'un amplificateur opérationnel avec une sortie à collecteur ouvert.

6. Circuit de sécurité selon la revendication 1, caractérisé par le fait que, comme étage final (4) est prévu un circuit en pont avec au moins quatre commutateurs (21 à 24) à semi-conducteur et que l'un (21) des commutateurs (21, 24) à semi-conducteur, qui passent à l'état conducteur pour l'ouverture du papillon des gaz, est relié, par l'intermédiaire du dispositif (44, 45) de commutation, à un pôle (25) d'une source de tension d'exploitation.

7. Circuit de sécurité selon la revendication 6, caractérisé par le fait que le dispositif de commutation est constitué de deux commutateurs (44, 45), qui sont montés essentiellement en parallèle et dont un premier peut être commandé par le signal de commutation et dont le second peut être commandé par le signal de sortie du comparateur (46).

8. Circuit de sécurité selon la revendication 7, caractérisé par le fait que le second commutateur est un transistor (51), dont la base est reliée par un diviseur de tension à l'entrée de non-changement de signe du comparateur (46) ; par le fait que le borne du premier commutateur (44), située du côté opposé au pôle (25) de la source de tension d'exploitation, est reliée, par l'intermédiaire d'une diode (52), avec le collecteur du transistor (51), et par l'intermédiaire d'une résistance (60) et d'une autre diode (61), de polarité opposée lorsque le premier commutateur (44) est ouvert, avec l'entrée de non-changement de signe du comparateur (46).

9. Circuit de sécurité selon l'une des revendications précédentes, caractérisé par le fait que, dans le cas d'une installation de commande d'accélérateur de type E, on peut amener au régulateur (5) la position de la pédale d'accélérateur (15) comme valeur prescrite et la position de l'organe réglant (2) comme valeur réelle.

10. Circuit de sécurité selon l'une des revendications 1 à 8, caractérisé par le fait que, dans le cas d'une installation de régulation de la vitesse, on peut amener au régulateur (5) une valeur prescrite mémorisée et, comme valeur réelle, la vitesse du véhicule.

11. Circuit de sécurité selon l'une des revendications 1 à 8, caractérisé par le fait que l'on peut en outre amener au régulateur (5), comme valeur réelle, la vitesse de rotation du moteur.

Fig. 1

EP 0 371 151 B1

Fig. 2

Fig. 4

Fig. 3